**Europäisches Patentamt**

**European Patent Office**

**Office européen des brevets**

(11) Numéro de publication: **0 200 601**
**B1**

(12) **FASCICULE DE BREVET EUROPEEN**

(45) Date de publication du fascicule du brevet: **22.08.90**

(51) Int. Cl.⁵: **A 63 F 9/22, G 09 B 9/04**

(21) Numéro de dépôt: **86400672.1**

(22) Date de dépôt: **27.03.86**

(54) **Procédé de figuration d'images panoramiques utilisant un vidéodisque, vidéodisque et installation pour sa mise en oeuvre.**

(30) Priorité: **05.04.85 FR 8505226**

(43) Date de publication de la demande:
**05.11.86 Bulletin 86/45**

(45) Mention de la délivrance du brevet:
**22.08.90 Bulletin 90/34**

(84) Etats contractants désignés:
**AT BE CH DE GB IT LI LU NL SE**

(56) Documents cités:
**EP-A-0 107 981**
**WO-A-83/02705**
**US-A-4 322 726**

(73) Titulaire: **GIRAVIONS DORAND, Société dite:**
**5 rue Jean Macé**
**F-92150 Suresnes (FR)**

(72) Inventeur: **Allard, Jean Claude**
**13 rue Ravon**
**F-92340 Bourg La Reine (FR)**
Inventeur: **Saunier, Christian**
**3 rue Derondel**
**F-95120 Ermont (FR)**

(74) Mandataire: **Thibon-Littaye, Annick**
**Cabinet A. THIBON-LITTAYE 11 rue de l'Etang**
**F-78160 Marly-le-Roi (FR)**

EP 0 200 601 B1

Courier Press, Leamington Spa, England.

**Description**

La présente invention a pour objet un procédé de figuration d'images panoramiques devant un observateur. Elle concerne également une installation pour la mise en oeuvre de ce procédé ainsi que les vidéodisques porteurs d'enregistrements d'images spécialement conçus pour être utilisés dans une telle installation et destinés à la mise en oeuvre du procédé.

Les enregistrements d'images sur vidéodisque présentent d'une manière générale divers avantages par rapport aux enregistrements plus classiques effectués sur film cinématographique. Leur intérêt est lié en particulier à la facilité et à la rapidité avec lesquelles on peut accéder à chaque image individuelle par des déplacements de l'organe lecteur déterminés par une référence codée de la position radiale de l'image sur le vidéodisque. Cependant, l'invention met encore à profit d'autres particularités de ce système d'enregistrement d'images qui n'avaient pas été exploitées antérieurement.

Le procédé selon l'invention est susceptible de nombreuses applications dans des domaines variés, qui pourront demander une plus ou moins large adaptation des moyens dans chaque cas particulier. Un exemple qui illustre particulièrement bien les avantages que l'on peut tirer de l'invention est celui des techniques de simulation de paysages, à faire défiler par exemple devant des appareils de visée, en fonction de commandes d'orientation déterminées par l'utilisateur. On pensera là notamment aux jeux à commande électronique, à l'entraînement à la visée dans des dispositifs de simulation de tir, aux guides de visite ou d'orientation automatiques.

Dans le cadre d'un jeu électronique et d'images synthétiques, la demande de brevet WO 83/02705 décrit l'emploi d'un vidéodisque pour reconstituer des images et les projeter devant un observateur dans un appareil de simulation de tir. L'observateur dispose d'un axe de visée qu'il oriente vers une cible synthétique en déplacement sur un paysage fixe, effectuant ainsi un tir fictif. Le vidéodisque comporte plusieurs fichiers d'enregistrements d'images, soit une piste en spirale commune à plusieurs fichiers, soit sur des pistes en boucles fermées différentes. Ces images, associées à des références codées respectives, figurent des types d'impacts d'un projectile sur la cible, différents les uns des autres suivant qu'un tel impact supposé est proche ou lointain et qu'il se produit dans une zone ou une autre de l'écran observé. L'appareil permet de sélectionner un fichier ou un autre en fonction du résultat du tir, calculé par comparaison entre les coordonnées du projectile fictif et celles de la cible.

Par rapport à ce document, l'invention s'intéresse plus spécialement à la reproduction d'un paysage panoramique dont l'observateur doit voir défiler les images, dans des conditions simulant celles que l'on rencontre par exemple dans les tourelles de tir, quand l'observateur dispose de moyens lui permettant de commander l'orientation de la tourelle, en lui faisant subir éventuellement un tour de révolution complet, et lui permettant également de choisir une valeur de grossissement qui détermine l'étendue du champ vu à travers une lunette de visée par laquelle il observe le paysage. Pour répondre aux exigences rencontrées dans ce genre d'application, elle propose d'utiliser un vidéodisque qui comporte plusieurs fichiers d'enregistrement d'images d'un même panorama.

Ainsi, la présente invention a principalement pour objet un procédé de figuration d'images devant un observateur disposant de moyens de commande lui permettant de déterminer au moins une orientation d'angle de vue en azimut, dans lequel lesdites images sont reconstituées à partir d'enregistrements d'images répartis en plusieurs fichiers sur un vidéodisque où sont également enregistrées des références codées attribuées à chaque enregistrement et dans lequel on opère une sélection des images à reconstituer, par lesdites références codées, en fonction de l'orientation déterminée par lesdits moyens de commande, caractérisé en ce que le vidéodisque utilisé comporte au moins deux fichiers d'enregistrements d'images d'un même panorama, dans lesquels chacun comporte une série d'enregistrements d'images dudit panorama prises sous des angles de vue progressivement variables en azimut par incréments successifs, et dans lesquels les enregistrements d'un second desdits fichiers correspondent à des prises de vues effectuées sous un fort grossissement d'image, différent d'un faible grossissement utilisé pour les enregistrements d'un premier desdits fichiers, en ce que lesdits moyens de commande permettent en outre à l'utilisateur de déterminer deux valeurs de grossissement différentes, et en ce que ladite sélection des images à reconstituer s'effectue d'une part entre les enregistrements du premier fichier et ceux du second fichier en fonction de la valeur de grossissement déterminée par lesdits moyens de commande, et d'autre part parmi les différents enregistrements d'un même fichier en fonction de l'orientation en azimut déterminée par lesdits moyens de commande.

Suivant une autre particularité, ce procédé se caractérise en ce que le vidéodisque comporte au moins un ensemble de fichiers comprenant, outre lesdits deux fichiers, au moins un troisième fichier où les enregistrements résultent de prises de vue effectuées sous le même fort grossissement que ceux dudit second fichier, mais sur des fractions d'images du premier fichier différentes en angle de site, et en ce que ladite sélection s'effectue en outre entre ledit second et ledit troisième fichiers en fonction d'un angle de site déterminé par lesdits moyens de commande.

Dans une forme d'application préférée de l'invention, lesdites images reconstitueés sont transmises dans une lunetté de visée d'une tourelle de tir orientable, lesdits moyens de commande comportant un manche de pilotage déterminant l'orientation de la tourelle et un commutateur de grossissement déterminant l'étendue du champ vu à travers ladite lunette.

L'invention a également pour objet une installation pour la mise en oeuvre du procédé ci-dessus, caractérisée en ce qu'elle comporte en combinaison ledit vidéodisque, un lecteur de vidéodisque comportant des moyens de reconstitution desdites images, un poste d'observation desdites images reconstituées comportant lesdits moyens de commande à disposition d'un observateur, et des moyens électroniques pour opérer automatiquement ladite sélection.

Dans des modes de mise en oeuvre préférés de l'invention, le vidéodisque comporte au moins trois fichiers, chacun comprenant une série d'enregistrements d'images correspondant, en liaison avec les moyens de commande de visée, avec une possibilité de sélection entre au moins deux valeurs de grossissement, entre au moins deux valeurs d'angles de vue en site, et entre une série d'angles de vue progressivement variables par incréments successifs en azimut. La possibilité de variation en azimut peut avantageusement s'étendre sur 360 degrés, alors que l'on aura souvent intérêt à réduire à un faible nombre, de 3 à 6 par exemple, le nombre de fichiers d'angles de site différent. Les fichiers peuvent comprendre par exemple un premier fichier à grand champ, correspondant à la totalité du champ vu sous faible grossissement, et au moins deux fichiers d'images partielles correspondant à des orientations différentes en site, pour un même grossissement relativement important.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels:

—la figure 1 représente schématiquement les organes essentiels d'une installation selon l'invention;

—la figure 2 illustre la description d'un vidéodisque utilisable;

—la figure 3 illustre un organigramme du procédé mis en oeuvre dans cette installation et utilisant un tel vidéodisque.

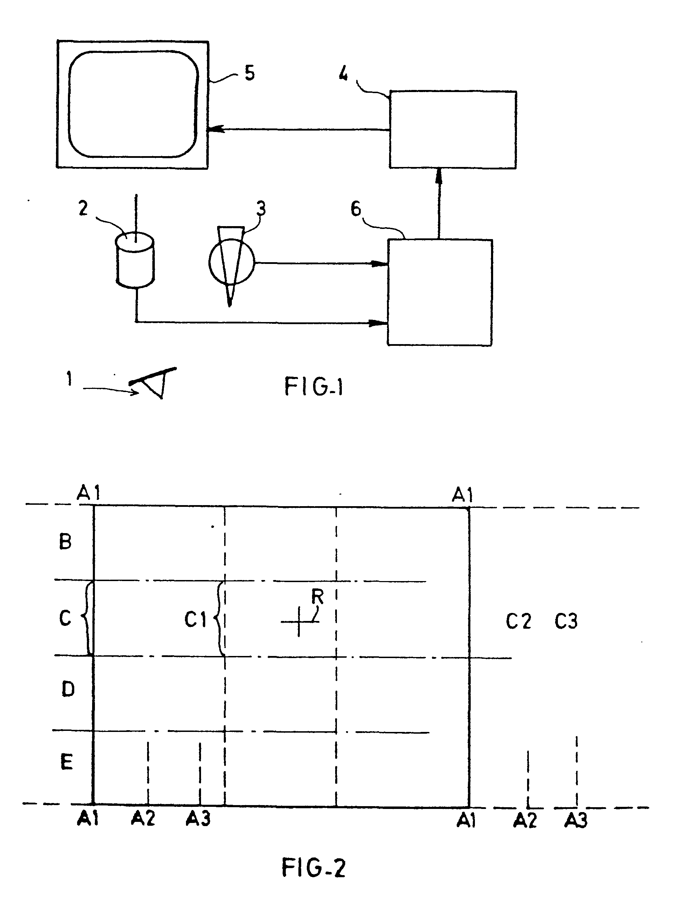

Selon la figure 1, l'installation comporte un poste d'observation 1, dans lequel un observateur dispose de moyens de commande de visée illustrés par un manche de pilotage 2 et un commutateur de grossissement 3. Il peut s'agir par exemple d'un poste de simulation d'une tourelle de tir, dans laquelle le manche de pilotage déterminerait l'orientation de la tourelle et le commutateur 3 déterminerait l'étendue du champ vu à travers une lunette d'observation du paysage. On sait que dans ce cas, la lunette comporte de manière classique des moyens pour faire apparaître en superposition avec le paysage observé, un réticule de visée qui facilite la commande d'orientation.

L'installation de la figure 1 comporte par ailleurs un lecteur de vidéodisque 4 qui permet de faire apparaître sur un écran 5, des images reconstituées à partir d'enregistrements portés sous forme codée par le vidéodisque introduit dans le lecteur. L'écran 5 est disposé de manière à être vu du poste d'observation 1. Dans l'application particulière mentionnée ci-dessus, les images sont en fait transmises dans la lunette.

Elles représentent ainsi le paysage reproduit à la vue de l'observateur, en fonction des commandes qu'il simule au moyen du manche de pilotage 2 et du commutateur de grossissement 3, comme s'il s'agissait d'une tourelle de tir. Les liaisons fonctionnelles entre ces organes de commande et le lecture de vidéodisque 4 sont assurées à travers un calculateur électronique ou ordinateur 6.

Les vidéodisques qui peuvent être utilisés dans l'installation ci-dessus pour la mise en oeuvre du procédé selon l'invention répondent à une conception spéciale qui sera décrite en faisant référence à la figure 2. Cette figure ne représente pas la disposition matérielle des images sur le vidéodisque, mais le positionnement relatif des différentes images telles qu'elles seraient découpées dans un panorama déterminé.

On commencera par rappeler que comme dans tout vidéodisque, chaque image est enregistrée, sous une forme codée, sur un tour complet de rotation du disque. De la sorte, l'image lue à chaque instant, pour restitution dans la lunette de l'observateur, dépend uniquement de la position radiale de l'organe de lecture sur le disque. Cette position est repérée par une référence codée, généralement un simple numéro d'ordre de l'image, qui est également enregistrée sur le disque en liaison avec l'image associée. La sélection de l'image à restituer s'effectue sur cette référence codée.

Dans le disque selon l'invention, une première série d'enregistrements d'images, constituant ce que l'on a convenu ici d'appeler un fichier d'enregistrements d'images, correspond aux images repérées A1, A2, A3 etc. sur la figure 2. On voit que sur le panorama correspondant, les différentes images sont décalées latéralement les unes par rapport aux autres, par incréments successifs dont la valeur est faible en regard de la largeur de l'image elle-même. En pratique on a ainsi un nombre important d'enregistrements, allant jusqu'à couvrir un tour de révolution complet autour du centre d'observation. Avec par exemple 360 enregistrements dans le fichier A, le décalage d'une image à la suivante sur le panorama sera équivalent à 1 degré d'angle. Pour les enregistrements d'images de ce fichier, on considère que le déplacement des images s'effectue en azimut.

Il s'agit par ailleurs, pour le fichier A, d'images valables pour être restituées dans la lunette de l'installation, lorsque celle-ci est réglée pour le grand champ d'observation, donc sous la valeur la plus faible du grossissement. On considère que dans ce cas il n'est pas besoin d'une possibilité de déplacement en site. Quand on passe par commutation au fort grossissement, l'image visible à l'observateur correspond à une fraction seulement du champ de l'image du fichier A. Dans cette situation la simulation d'un déplacement en site est alors rendue possible, grâce à l'utilisation d'autres fichiers figurant sur le même vidéodisque, soit B, C, D et E. Dans le cas particulier considéré comme exemple, on a prévu quatre fichiers d'enregistrements d'images à faible champ, donc en plus du fichier A à grand champ. Chacun de ces fichiers comporte autant d'enregistrements, pour la même valeur de décalage en azimut d'une image à la suivante. Mais les images sont centrées sur des orientations différentes en site, avec quatre hauteurs de site différentes dans le cas particulier illustré.

La sélection entre les quatre fichiers B, C, D, E, s'opère automatiquement d'après la position du réticule R sur l'image grand champ restituée du fichier A. La disposition illustrée sur la figure 2 implique, en fonction de la position du réticule R, que dans le fichier A l'enregistrement sélectionné est celui de l'image A1, et que lors du passage au fort grossissement, il y aura sélection du fichier C et restitution de l'image C1 correspondant dans ce fichier à la même position en azimut que l'image A1.

La fabrication du vidéodisque utilisé selon l'invention s'effectue de manière en elle-même classique par découpage des différentes images sur bandes optiques à partir d'un nombre de vues restreint (une dizaine par exemple) d'un paysage vu autour d'un point d'observation.

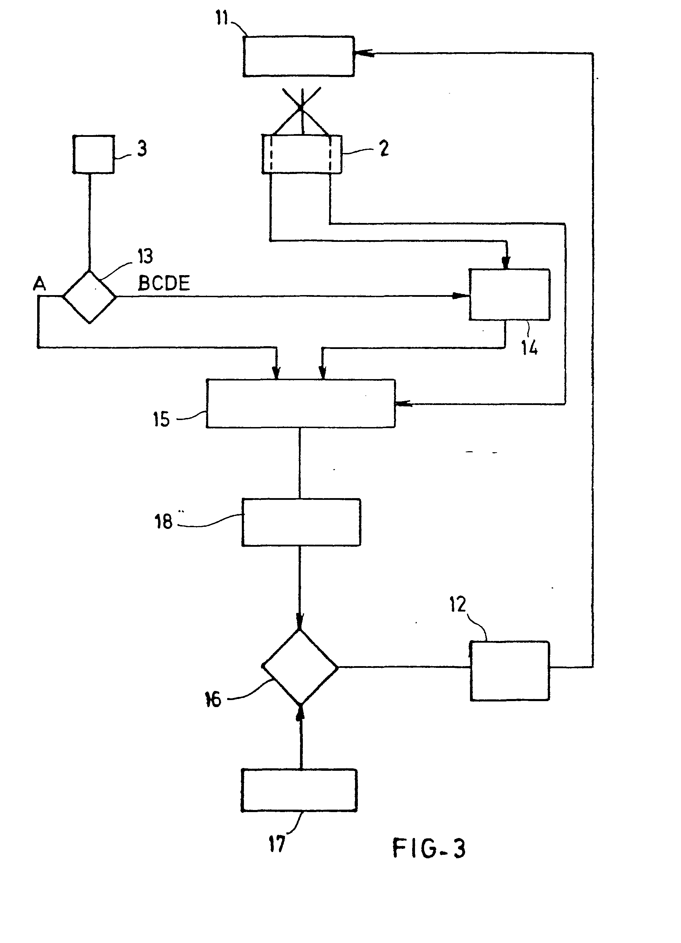

On a repris les différentes étapes sur l'organigramme de la figure 3 où l'on a indiqué également les différents éléments constitutifs de l'installation de manière schématique. On retrouve ainsi le poste d'observation comprenant un manche de pilotage 2, un commutateur de grossissement 3 et une lunette 11 dans laquelle sont projetées les images reconstituées par le lecteur de vidéodisque, au niveau d'un dispositif d'élaboration de l'image vidéo 12.

La sélection entre le fichier grand champ et les fichiers petit champ s'effectue en 13 en fonction de la position du commutateur 3. L'information de site, élaborée par le manche de pilotage, est transmise à un dispositif 14 qui effectue la sélection entre les quatre fichiers B, C, D, E. L'information de gisement est transmise directement à un dispositif 15 d'élaboration du numéro de l'image qui reçoit également les informations en provenance des dispositifs de sélection de fichiers 13 et 14.

Au niveau du lecteur de vidéodisque, un comparateur 16 permet la sélection de l'image à reconstituer, en maintenant le numéro de l'image détectée sous l'organe lecteur 17 à égalité avec la valeur de consigne transmise en 18.

Parmi les variantes que l'on peut apporter au dispositif ci-dessus, on signalera en particulier la possibilité d'enregistrer sur le même vidéodisque plusieurs séries de fichiers correspondant à des panoramas différents.

D'autre part pour la commodité de la description de la figure 2, on s'est intéressé à une division de l'image dans les quatres fichiers B, C, D, E donnant des images partielles nettement distinctes. Mais en pratique, il sera souvent plus commode d'enregistrer des images se recoupant en site.

Naturellement, l'invention n'est en rien limitée par les particularités qui ont été spécifiées dans ce qui précède ou par les détails du mode de mise en oeuvre particulier choisi pour illustrer l'invention. Toutes sortes de variantes peuvent être apportées à la réalisation particulière qui a été décrité à titre d'exemple, à son utilisation et à ses éléments constitutifs, sans sortir pour autant du cadre de l'invention. Cette dernière englobe notamment tous les moyens constituant des équivalents techniques des moyens décrits ainsi que leurs combinaisons.

**Revendications**

1. Procédé de figuration d'images devant un observateur disposant de moyens de commande lui permettant de déterminer au moins une orientation d'angle de vue en azimut, dans lequel lesdites images sont réconstituées à partir d'enregistrements d'images répartis en plusieurs fichiers sur un vidéodisque où sont également enregistrées des références codées attribuées à chaque enregistrement, et dans lequel on opère une sélection des images à reconstituer, par lesdites références codées, en fonction de l'orientation déterminée par lesdits moyens de commande, caractérisé en ce que, le vidéodisque comporte:

—un premier fichier (A) comportant une série d'enregistrements d'images d'un panorama prises sous des angles de vue progressivement variable en azimut par incréments successifs, correspondant à un faible grossissement du champ d'observation du panorama;

—au moins un second fichier (B) d'enregistrement d'images du même panorama prises sous des angles de vues identiques en azimut que ledit premier fichier, correspondant à des prises de vues effectuées sous un fort grossissement donné, en ce que ladite sélection des images à reconstituer s'effectue;

—d'une part entre les enregistrements du premier fichier et ceux d'un fichier à fort grossissement en fonction d'une valeur de grossissement donnée déterminée par lesdits moyens de commande;

—et d'autre part parmi les différents enregistrements d'un même fichier en fonction de l'orientation en azimut déterminée par lesdits moyens de commande.

2. Procédé suivant la revendication 1, caractérisé en ce que le vidéodisque comporte au moins un ensemble de fichiers comprenant, outre lesdits premier et second fichiers (A, B), au moins un troisième fichier (C) où les enregistrements résultent de prises de vues effectuées sous le même fort grossissement que ceux dudit second fichier, mais sur des fractions d'images du premier fichier différentes en angle de site, et en ce que ladite sélection s'effectue en outre entre ledit second et ledit troisième fichiers en fonction d'un angle de site déterminé par lesdits moyens de commande.

3. Procédé selon la revendication 2, caractérisé en ce que le nombre de fichiers à fort grossissement, correspondant à des angles de site différents, est comprise entre 3 et 6.

4. Procédé selon l'une quelconque des revendications 1 à 3, caractérisé en ce que la variation d'angle de vue en azimut, s'étend sur 360 degrés.

5. Procédé selon l'une quelconque des revendications 1 à 4, caractérisé en ce que lesdites images reconstituées sont transmises dans une lunette de visée d'une tourelle de tir orientable, lesdits moyens de command comportant un manche de pilotage (2) déterminant l'orientation de la tourelle et un commutateur de grossissement (3) déterminant l'étendue du champ vu à travers ladite lunette.

6. Procédé selon l'une quelconque des revendications 2 à 5, caractérisé en ce que la sélection entre lesdits fichiers à fort grossissement (B, C, D) s'opère automatiquement d'après la position d'un réticule de visée (R) sur l'image restituée du premier fichier (A).

7. Installation de figuration d'images devant un observateur disposant de moyens de commande lui permettant de déterminer au moins une orientation d'angle de vue en azimut comportant:

—un vidéodisque où sont enregistrées lesdites images réparties en plusieurs fichiers, ainsi que des références codées attribuées à chaque enregistrement;

—un lecteur de vidéodisque (4) comportant des moyens de reconstitution (12) desdites images;

—un poste d'observation comportant lesdits moyens de commande (2, 3) à la disposition d'un observateur;

—et des moyens électroniques pour opérer automatiquement une sélection de fichiers;
caractérisé en ce que:

—le vidéodisque comporte un premier fichier (A) comprenant une série d'enregistrements d'images d'un panorama prises sous des angles de vues progressivement variables en azimut par incréments successifs, correspondant à un faible grossissement du champ d'observation du panorama, au moins un second fichier (B) d'enregistrement d'images du même panorama prises sous des angles de vues identiques en azimut que ledit premier fichier, correspondant à des prises de vues effectuées sous un fort grossissement donné;

—et en ce que les moyens électroniques comportent des moyens de sélection des images à restituer d'une part entre les enregistrements du premier fichier et ceux d'un fichier à fort grossissement en fonction d'une valeur de grossissement donnée déterminée par lesdits moyens de commande et d'autre part parmi les différents enregistrements d'un même fichier en fonction de l'orientation en azimut déterminée par lesdits moyens de commande.

8. Installation suivant la revendication 7, caractérisé en ce que lesdits moyens de commande comportent un manche de pilotage (2) et un commutateur de grossissement (3) et en ce que lesdits moyens électroniques comportent des moyens (13) de sélection dudit premier fichier à faible grossissement en fonction de la position dudit commutateur, des moyens (14) de sélection entre plusieurs fichiers à fort grossissement en fonction d'une orientation en site dudit manche de pilotage, des moyens (15) d'élaboration d'un numéro d'image à reconstituer en fonction d'informations reçues desdits moyens de sélection de fichier (13, 14) et en fonction d'une information d'azimut transmise dudit manche de pilotage, et des moyens de comparaison entre ledit numéro d'image à reconstituer et un numéro d'image détectée dans le lecteur de vidéodisque.

**Patentansprüche**

1. Verfahren zum Anzeigen von Bildern vor einem Beobachter mit Steuermitteln, die es ihm erlauben, mindestens eine Orientierung des Azimut-Blickwinkels zu definieren,

—in welchem Verfahren die genannten Bilder aus auf verschiedene Dateien einer Bildplatte verteilten Bildaufzeichnungen wiederhergestellt werden, wobei die Bildplatte ebenfalls jeder Aufzeichnung zugeordnete codierte Referenzen enthält; und

—in welchem Verfahren durch die codierten Referenzen als Funktion von der durch die Steuermittel bestimmten Orientierung eine Auswahl von wiederherzustellenden Bildern getroffen wird dadurch gekennzeichnet, daß die Bildplatte enthält

—eine erste Datei (A) mit einer Serie von Aufzeichnungen von Panoramabildern, welche unter im Azimut progressive variablen Blickwinkeln durch sukzessive Schritte mit einer schwachen Vergrößerung des Blickfeldes des Panoramas aufgenommen werden;

—wenigstens eine zweite Datei (B) zum Aufzeichnen von Bildern desselben Panoramas, welche unter im Azimut identischen Blickwinkeln wie die genannte erste Datei (A), jedoch unter einer vorgegebenen starken Vergrößerung aufgenommen werden; und daß die wiederherzustellenden Bilder ausgewählt werden—zum einen unter den Aufzeichnungen der ersten Datei und denjenigen einer Datei mit starker Vergrößerung für einen vorgegebenen, durch die genannten Steuermittel bestimmten Wert der Vergrößerung;

—und zum anderen unter den verschiedenen Aufzeichnungen ein und derselben Datei als Funktion der durch die Steuermittel bestimmten Orientierung im Azimut.

2. Verfahren nach Anspruch 1, dadurch gekennzeichnet, daß die Bildplatte mindestens einen Satz Dateien mit über die genannte erste und zweite Datei (A, B) hinaus wenigstens einer dritten Datei (C) enthält, wobei die Aufzeichnungen der dritten Datei aus unter derselben starken Vergrößerung wie diejenigen der genannten zweiten Datei, aber auf Bildteilen der ersten Datei unterschiedlich im Geländewinkel gemachten Aufnahmen resultieren, und daß im übrigen zwischen der genannten zweiten und der genannten dritten Datei als Funktion eines durch die Steuermittel bestimmten Geländewinkels ausgewählt wird.

3. Verfahren nach Anspruch 2, dadurch gekennzeichnet, daß die Zahl der Dateien mit starker Vergrößerung, die den verschiedenen Geländewinkeln entsprechen, zwischen drei und sechs vorgesehen wird.

4. Verfahren nach einem der Ansprüche 1 bis 3, dadurch gekennzeichnet, daß die Variation des Azimut-Blickwinkels über 360° erstreckt wird.

5. Verfahren nach einem der Ansprüche 1 bis 4, dadurch gekennzeichnet, daß die genannten wiederherzustellenden Bilder in ein Zielfernrohr einer orientierbaren Schußwaffe übertragen werden, wobei die genannte Steuermittel einen die Orientierung der Schußwaffe bestimmenden Steuergriff und einen die Größe des Blickwinkels durch das Fernrohr bestimten Verrößerungsschalter umfassen.

6. Verfahren nach einem der Ansprüche 2 bis 5, dadurch gekennzeichnet, daß zwischen den genannten Dateien mit starker Vergrößerung (B, C, D) automatisch gemäß der Position eines Fadenkreuzes (R) auf dem rekonstruierten Bild der ersten Datei (A) ausgewählt wird.

7. Vorrichtung zum Anzeigen von Bildern vor einem Beobachter mit Steuermitteln, die es ihm erlauben, mindestens eine Orientierung des Azimut-Blickwinkels zu definieren, enthaltend

—eine Bildplatte, auf der die genannten Bilder verteilt auf mehreren Dateien ebenso aufgezeichnet sind wie jeder Aufzeichnung zugeordnete, codierte Referenzen;

—in Bildplattenlesegerät (4) mit Mitteln (12) zum Wiederherstellen der genannten Bilder;

—einen Beobachtungsstand mit Steuermitteln (2, 3) zur Disposition des Beobachters; und

—elektronische Mittel zur automatischen Auswahl einer Datei, dadurch gekennzeichnet, daß die Bildplatte eine erste Datei (A) mit einer Serie von Aufzeichnungen von Panoramabildern enthält, welche unter im Azimut progressiv variablen Blickwinkeln durch sukzessive Schritte mit einer schwachen Vergrößerung des Blickfeldes des Panoramas aufgenommen werden, und wenigstens eine zweite Datei (B) zum Aufzeichnen von Bildern desselben Panoramas umfaßt, welche unter im Azimut identischen Blickwinkeln wie die genannte erste Datei (A), jedoch unter einer vorgegebenen starken Vergrößerung aufgenommen werden; und

daß die elektronischen Mittel Auswahlmittel zum Selektieren der zu rekonstruierenden Bilder enthalten,

—zum einen unter den Aufzeichnungen der ersten Datei und denjenigen einer Datei mit starker Vergrößerung für einen vorgegebenen, durch die genannten Steuermittel bestimmten Wert der Vergrößerung und

—zum anderen unter der verschiedenen Aufzeichnungen ein und derselben Datei als Funktion der durch die Steuermittel bestimmten Orientierung im Azimut.

8. Vorrichtung nach Anspruch 7, dadurch gekennzeichnet, daß die genannten Stezuermittel einen Steuergriff (2) und einen Vergrößerungsschalter (3) umfassen und daß die genannten elektronischen Mittel abhängig von der Stellung des Vergrößerungsschalters wirksame Auswahlmittel (13) für die erste Datei schwacher Vergrößerung; Mittel (14) zur Auswahl zwischen mehreren Dateien starker Vergrößerung als Funktion einer Geländeausrichtung des genannten Steuergriffs; Mittel (15) zum Verarbeiten einer zu rekonstruierenden Bild-Nummer als Funktion der von den genannten Auswahlmitteln (13, 14) der Dateien enthaltenden Informationen sowie als Funktion einer von dem genannten Steuergriff übertragenen Information zum Azimut; und Mittel zum Vergleich zwischen der genannten Nummer eines zu rekonstruierenden Bildes sowie einer Nummer eines im Bildplattenlesegerät erfaßten Bildes enthält.

**Claims**

1. Method for displaying pictures to a spectator provided with control means allowing him to determine at least one azimuth viewing angle orientation in which the pictures are reconstituted from picture recordings divided between a plurality of files on a video disc in which there are also recorded coded references allocated to each recording and in which the pictures to be reconstituted are selected via these coded references as a function of the orientation determined by the control means, characterized in that the video disc comprises:

—a first file (A) comprising a sequence of recordings of pictures of a panorama taken at viewing angles whose azimuth can be progressively varied in successive increments corresponding to a small enlargement of the field of observation of the panorama;

—at least a second file (B) of recordings of pictures of the same panorama taken at viewing angles with an identical azimuth to the first file corresponding to shots taken with a large predetermined enlargement, and in that the pictures to be reconstituted are selected;

—on the one hand among the recordings of the first file and those of a file with a major enlargement as a function of a predetermined enlargement value determined by the control means,

—and, on the other hand, among the various recordings of a same file as a function of the azimuth orientation determined by the control means.

2. A method as claimed in claim 1, characterized in that the video disc comprises at least one set of files comprising, in addition to the first and second files (A, B), at least a third file (C), in which the recordings are shots taken at the same major enlargement as those of the second file, but in respect of fractions of pictures of the first file whose elevation angle differs and in that this selection also takes place between the second and third files as a function of an elevation angle determined by the control means.

3. A method as claimed in claim 2, characterized in that the number of files with major enlargement, corresponding to different elevation angles, is between 3 and 6.

4. A method as claimed in any one of claims 1 to 3, characterized in that the azimuth viewing angle variation extends over 360°.

5. A method as claimed in any one of claims 1 to 4, characterized in that the reconstituted pictures are transmitted into a panoramic sight of a shooting turret which can be oriented, the control means comprising a control column (2) determining the orientation of the turret and an enlargement switch (3) determining the extent of the field viewed through the sight.

6. A method as claimed in any one of claims 2 to 5, characterized in that selection among the major enlargement files (B, C, D) takes place automatically depending on the position of a sighting grid (R) on the picture reconstituted from the first file (A).

7. Installation for displaying pictures to a spectator provided with control means allowing him to determine at least one azimuth viewing angle orientation comprising:

—a video disc in which the pictures are recorded and divided among a plurality of files as well as reference codes allocated to each recording;

—a vide disc reader (4) comprising means (12) for reconstituting the pictures;

—a viewing station comprising the control means (2, 3) for the use of the spectator;

—electronic means for automatically making a file selection: characterized in that the video disc comprises a first file (A) comprising a sequence of recordings of pictures of a panorama taken at viewing angles whose azimuth can be progressively varied in successive increments corresponding to a small enlargement of the field of observation of the panorama, at least a second file (B) of recordings of pictures of the same panorama taken at viewing angles with an identical azimuth to the first file corresponding to shots taken at a large predetermined enlargement, and in that the electronic means comprise means for selecting the pictures to be reconstituted on the one hand among the recordings of the first file and those of a major enlargement file as a function of a predetermined enlargement value determined by the control means and on the other hand among the different recordings of a same file as a function of the azimuth orientation determined by the control means.

8. An installation as claimed in claim 7, characterized in that the control means comprise a control column (2) and an enlargement switch (3) and in that the electronic means comprises means (13) for selection from the first file with a small enlargement as a function of the position of the switch, means (14) for selecting among a plurality of major enlargement files as a function of an elevational orientation of the control column, means (15) for processing a picture number to be reconstituted as a function of information received from the file selection means (13, 14) and as a function of azimuth information transmitted from the control column and means for comparing the picture number to be reconstituted and a picture number detected in the video disc reader.

FIG-1

FIG-2

FIG-3